Europäisches Patentamt

European Patent Office

Office européen des brevets

(19)

(11) Veröffentlichungsnummer : **0 188 787**
**B1**

(12) **EUROPÄISCHE PATENTSCHRIFT**

(45) Veröffentlichungstag der Patentschrift :
15.06.88

(51) Int. Cl.⁴ : **B 65 G 61/00**

(21) Anmeldenummer : 85116341.0

(22) Anmeldetag : 20.12.85

(54) **Vorrichtung zum Entladen einzelner Bobinen von einer Unterlage.**

(30) Priorität : 19.01.85 DE 3501692

(43) Veröffentlichungstag der Anmeldung :
30.07.86 Patentblatt 86/31

(45) Bekanntmachung des Hinweises auf die Patenterteilung : 15.06.88 Patentblatt 88/24

(84) Benannte Vertragsstaaten :
AT BE CH DE FR GB IT LI LU NL

(56) Entgegenhaltungen :
EP-A- 0 033 689
GB-A- 2 000 739
US-A- 3 850 313
US-A- 4 415 305

(73) Patentinhaber : **Maschinenfabrik Fr. Niepmann GmbH & Co.**
**Bahnhofstrasse 21**
**D-5800 Gevelsberg (DE)**

(72) Erfinder : **Brinker, Alfred, Dr.**
**Am Jägerhaus 19**
**D-5820 Gevelsberg (DE)**
Erfinder : **Dreyer, Uwe, Dipl.-Ing.**
**Delibusch 111**
**D-5600 Wuppertal 2 (DE)**

(74) Vertreter : **Patentanwälte Dipl.-Ing. Alex Stenger**
**Dipl.-Ing. Wolfram Watzke Dipl.-Ing. Heinz J. Ring**
**Kaiser-Friedrich-Ring 70**
**D-4000 Düsseldorf 11 (DE)**

**Beschreibung**

Die Erfindung betrifft eine Vorrichtung zum Entladen einzelner Bobinen von einer Unterlage, auf der eine Mehrzahl von Bobinen in mehreren Reihen nebeneinander und in mehreren Lagen übereinander gestapelt sind, mittels eines Greifers.

Auf vielen Verpackungsmaschinen, beispielsweise Einschlagmaschinen und Schlauchbeutelmaschinen, wird das Verpackungsmaterial, wie Papier, Aluminiumfolie, Kunststoffolie oder Laminatfolie, von Rollen verarbeitet, die auch als Bobinen bezeichnet werden. Diese Bobinen werden meist von Hand vor eine Abspulvorrichtung gebracht, auf diese aufgeschoben und anschließend aufgespannt.

Da im Hinblick auf die Steigerung der Geschwindigkeit derartiger Verpackungsmaschinen das Heben, Aufschieben und Aufspannen der Bobinen auf die Abspulvorrichtung dem überwiegen weiblichen Bedienungspersonal nicht mehr zuzumuten ist, wurden Vorrichtungen entwickelt, die einen Bobinenvorrat für eine längere Laufzeit aufnehmen und die Bobinen nacheinander auf die Abspulvorrichtung aufschieben. Der Nachteil dieser bekannten Vorrichtungen besteht darin, daß sie manuell beschickt und gesteuert werden müssen.

Aus der US-A-38 50 313 ist ein Handhabungsgerät bekannt, welches über einen Greifer verfügt, der an einem höhenverstellbaren Rahmen durch unter einem Winkel von 90° zueinander verlaufende Linearantriebe in einer Ebene verfahrbar ist. Das bekannte Handhabungsgerät ist mit Sensoren versehen, die jeweils in einer Ebene liegende Gegenstände erfassen und die Höhenverstellung des Rahmens steuern, sowie mit am Greifer angeordneten Sensoren zur Ausrichtung des Greifers zum jeweils zu erfassenden Gegenstand. Das bekannte Handhabungsgerät ist für das Entstapeln quaderförmiger Gegenstände bestimmt, die an ihren vier senkrechten, jeweils unter einem Winkel von 90° zueinander verlaufenden Flächen zwischen einer festen Anschlagfläche und einer anstellbaren Greiffläche erfaßt werden. Zur Lokalisierung und Handhabung zylindrischer Gegenstände, insbesondere von Bobinen mit unterschiedlichem Durchmesser, ist die bekannte Vorrichtung nicht geeignet.

Der Erfindung liegt daher die Aufgabe zugrunde, eine Vorrichtung zu schaffen, mit der Bobinen unmittelbar und vollautomatisch von einer handelsüblichen Transportvorrichtung, beispielsweise einer Palette, entnommen und der Verpackungsmaschine zugeführt werden können, um dort ebenfalls vollautomatisch aufgespannt und eingefädelt zu werden.

Die Lösung dieser Aufgabenstellung durch die Erfindung ist ausgehend von einer Vorrichtung der voranstehend beschriebenen Art dadurch gekennzeichnet, daß die Sensoren zur Höhenverstellung am Rahmen angeordnet sind und daß am Greifer mindestens ein Paar der Sensoren angeordnet ist, von denen der eine Sensor einen geringeren und der andere Sensor einen größeren Abstand von der Mittelachse des zylindrischen Gehäuses aufweist als der Außenhalbmesser der jeweils zu ergreifenden Bobinen.

Die erfindungsgemäße Vorrichtung ist in der Lage, jeweils eine von einer Mehrzahl in mehreren Reihen nebeneinander und in mehreren Reihen übereinander auf einer Unterlage gestapelter Bobinen mittels des Greifers gezielt zu erfassen und entweder unmittelbar der Abspulvorrichtung einer nachgeschalteten Verpackungsmaschine oder einem Transportsystem zuzuführen, das die Bobinen entweder zu einer Abspulvorrichtung oder einem vor der Abspulvorrichtung angebrachten Puffermagazin transportiert. Mit Hilfe des Sensorenpaares ist es möglich, das zylindrische Gehäuse des Greifers exakt über der Bobinenhülse der zu erfassenden Bobine zu positionieren, bevor der höhenverstellbare Rahmen mit dem Greifer abgesenkt wird, um diese Bobine zu ergreifen.

Gemäß einem weiteren Merkmal der Erfindung kann der Greifer als Spanndorn mit in radialer Richtung verstellbaren Spannelementen und das Gehäuse des Greifers dem Innendurchmesser der Bobinenhülsen angepaßt ausgebildet sein. Hierdurch ergibt sich eine besonders einfache Erfassung der einzelnen Bobinen, wobei erfindungsgemäß zur Vereinfachung der Einführung in die jeweilige Bobinenhülse das Gehäuse des Greifers mit einer konischen Verlängerung versehen sein kann.

Bei einer bevorzugten Ausführungsform der Erfindung sind die am Rahmen angeordneten Sensoren als jeweils einer Reihe der Bobinen zugeordnete Lichtschranken ausgebildet. Mit Hilfe dieser Lichtschranken ist es möglich, die jeweils nächste Bobine in der jeweils obersten Lage zu ermitteln.

Bei einer möglichen Ausführungsform der Erfindung sind die am Greifer angeordneten Sensoren an einem Tragarm befestigt, der um die Mittelachse des zylindrischen Gehäuses drehbar ist. In diesem Fall genügt ein Paar derartiger Sensoren, da sie durch die Rotation ihres Tragarmes den gesamten Umfang der Bobine erfassen.

Bei einer alternativen Ausführungsform sind mindestens zwei, vorzugsweise vier Paar Sensoren an einer am Gehäuse befestigten Tragplatte angeordnet. Hierbei handelt es sich um eine feste Anordnung der Sensorenpaare relativ zum Greifergehäuse.

Um die erfindungsgemäße Vorrichtung auf Bobinen unterschiedlicher Durchmesser einstellen zu können, ist gemäß einem weiteren Merkmal der Erfindung die Lage der Sensoren bezüglich der Mittelachse des Gehäuses entsprechend dem jeweiligen Außendurchmesser der Bobinen verstellbar.

Schließlich wird mit der Erfindung vorgeschlagen, an der konischen Verlängerung des Gehäuses mit der Bobinenhülse zusammenwirkende Zusatzsensoren zur Feinkorrektur des Greifers anzuordnen.

Auf der Zeichnung sind zwei Ausführungsbeispiele der erfindungsgemäßen Vorrichtung dargestellt, und zwar zeigen :

Fig. 1 eine perspektivische Teilansicht der Vorrichtung beim Entladen einzelner Bobinen von einer Palette,

Fig. 2 eine Draufsicht auf die Vorrichtung nach Fig. 1,

Fig. 3 eine Seitenansicht der vollständig gezeichneten Vorrichtung gemäß Fig. 2,

Fig. 4 eine der Fig. 2 entsprechende Draufsicht mit schematischer Darstellung der Antriebe,

Fig. 5 eine perspektivische Darstellung einer ersten Ausführungsform des Greifers mit fest angeordneten Sensoren,

Fig. 6 eine der Fig. 5 entsprechende Darstellung einer alternativen Ausführungsform und

Fig. 7 eine Draufsicht auf eine Ausführungsform der Vorrichtung mit dem in Fig. 6 dargestellten Greifer.

Die anhand eines Ausführungsbeispiels dargestellte Vorrichtung umfaßt ein Traggestell 1, das beim Ausführungsbeispiel aus einem waagerechten, auf dem Boden aufliegenden Gestellteil und einem an diesem befestigten, senkrecht verlaufenden Gestellteil besteht, an dem ein Rahmen 2 höhenverstellbar geführt ist. Zu diesem Zweck sind am senkrechten Teil des Traggestells 1 zwei Führungsstangen 1a befestigt, auf denen der Rahmen 2 mittels Führungsgliedern 2a geführt ist. Die Höhenverstellung erfolgt beim Ausführungsbeispiel durch zwei am Rahmen 2 befestigte und über Umlenkrollen 1b am Traggestell 1 geführte Ketten oder Zahnriemen 2b. Diese Zahnriemen 2b werden synchron von einem Hubmotor 3 angetrieben, der am Traggestell 1 befestigt ist und über eine Welle 3a jeweils eine der Umlenkrollen 1b jedes Zahnriemens 2b antreibt.

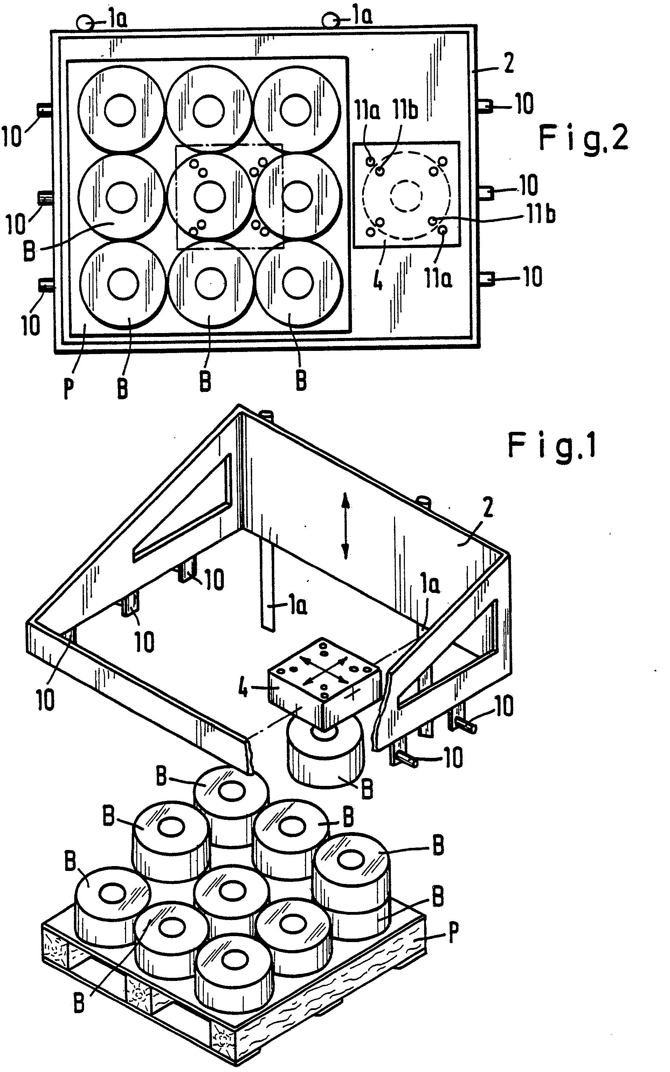

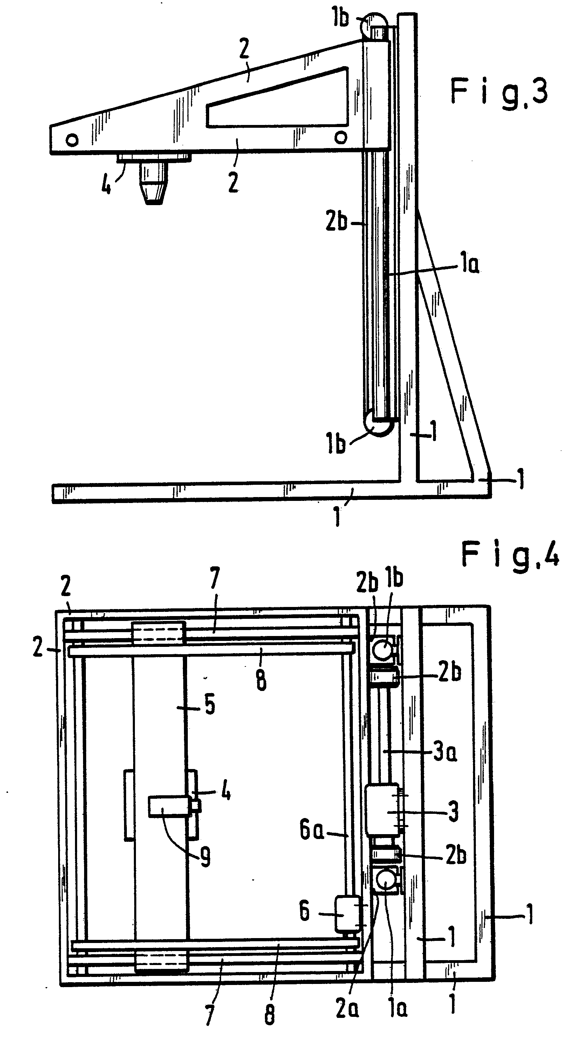

Wie in Fig. 1 schematisch angedeutet und in Fig. 4 anhand eines Ausführungsbeispiels dargestellt ist, ist am höhenverstellbaren Rahmen 2 ein Greifer 4 angeordnet, der durch unter einem Winkel von 90° zueinander verlaufende Linearantriebe in der Ebene des Rahmens 2 verfahrbar ist. Beim Ausführungsbeispiel nach Fig. 4 befindet sich der Greifer 4 an einer Traverse 5. Diese Traverse 5 kann durch einen Motor 6 in Längsrichtung des Rahmens 2 an diesem verfahren werden. Zu diesem Zweck ist die Traverse 5 auf Führungen 7 verschiebbar. Die Verschiebung erfolgt wiederum durch Ketten oder Zahnriemen 8, die über Umlenkrollen am Rahmen 2 geführt werden, von denen jeweils eine durch eine Welle 6a vom Motor 6 angetrieben werden.

Die rechtwinklig zur Bewegung der Traverse 5 erfolgende Verstellbewegung des Greifers 4 geschieht durch eine Führung des Greifers 4 an der Unterseite der Traverse 5, wie dies ebenfalls in Fig. 4 angedeutet ist. Diese in Querrichtung des Rahmens 2 erfolgende Bewegung des Greifers 4 wird durch einen Motor 9 erzielt. Die senkrecht zueinander verlaufenden Bewegungsrichtungen des Greifers 4 sind in Fig. 1 durch strichpunktierte Linien und durch ein Pfeilkreuz angedeutet.

Um gemäß Fig. 1 auf einer Palette P in mehreren Reihen nebeneinander und in mehreren Lagen übereinander gestapelte Bobinen B einzeln zu entladen, wird der Rahmen 2 aus einer oberen Ausgangsstellung mit Hilfe des Hubmotors 3 abgesenkt. Am Rahmen 2 sind mehrere jeweils einer Reihe der Bobinen B zugeordnete Lichtschranken 10 angeordnet, die die Abwärtsbewegung des Rahmens 2 stoppen, sobald der Greifer 4 in einer Ebene oberhalb der obersten Lage der Bobinen B angekommen ist. Nunmehr wird der Greifer 4 aus seiner in Fig. 2 mit ausgezogenen Linien eingezeichneten Ausgangsstellung über die zu entstapelnden Bobinen B gefahren, und zwar durch eine Bewegung des Greifers 4 unterhalb der Traverse 5 und durch eine Bewegung der Traverse 5 relativ zum Rahmen 2.

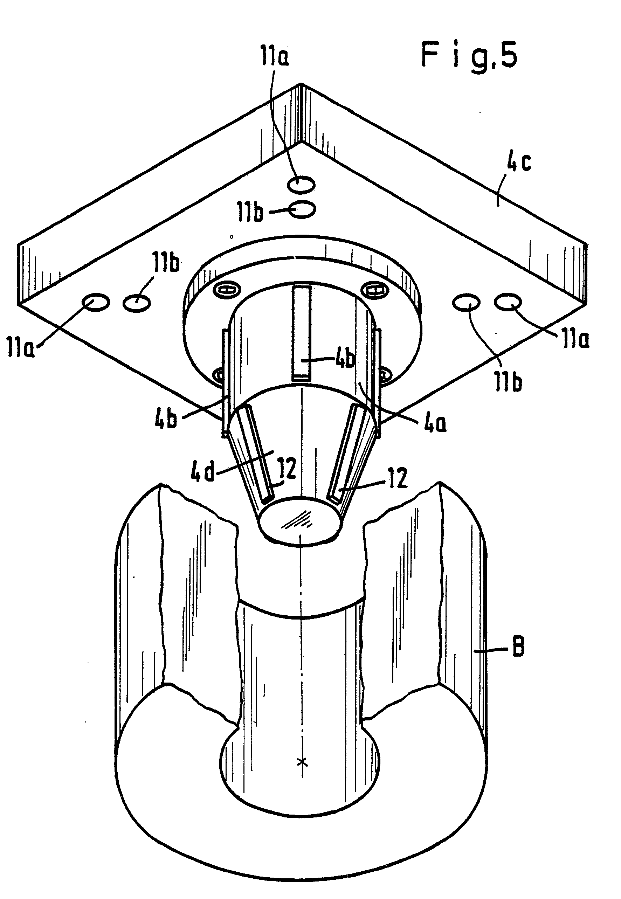

Wie am besten Fig. 5 erkennen läßt, ist bei diesem Ausführungsbeispiel der Greifer 4 als Spanndorn mit einem zylindrischen, dem Innendurchmesser der Bobinenhülsen angepaßten Gehäuse 4a ausgebildet, das mit in radialer Richtung verstellbaren Spannelementen 4b versehen ist. Um dieses Gehäuse 4a mit den Spannelementen 4b in die Bobinenhülse einfahren zu können, ist beim Ausführungsbeispiel nach den Figuren 1 bis 5 oberhalb des Gehäuses 4a eine Tragplatte 4c angeordnet, an der beim Ausführungsbeispiel vier Paar Sensoren 11a und 11b angeordnet sind. Der Greifer 4 wird in seinen beiden, unter 90° verlaufenden Bewegungsrichtungen so lange gesteuert verschoben, bis die radial außenliegenden Sensoren 11a der Sensorenpaare eine Freimeldung abgeben und die innenliegenden Sensoren 11b das Vorhandensein einer zu ergreifenden Bobine B signalisieren. In diesem, in Fig. 5 dargestellten Fall wird der Rahmen 2 mit dem Greifer 4 abgesenkt, so daß das Gehäuse 4a des Greifers 4 in die Bobinenhülse eintritt. Durch Ausfahren der Spannelemente 4b wird sodann die Bobine B erfaßt und durch Anheben des Rahmens 2 von der Palette P abgehoben und beispielsweise dadurch einer Weiterverarbeitung zugeführt, daß der Greifer 4 in seine Ausgangslage gemäß Fig. 2 zurückkehrt. In dieser Ausgangslage kann die jeweilige Bobine B durch Einziehen der Spannelemente 4b freigegeben und einer nachgeschalteten, auf der Zeichnung nicht dargestellten Transportvorrichtung übergeben werden.

Um beim Einfahren des Gehäuses 4a des Greifers 4 in die Bobinenhülse eine Feinkorrektur des Greifers 4 zu ermöglichen, ist beim Ausführungsbeispiel das zylindrische Gehäuse 4a des Greifers 4 mit einer konischen Verlängerung 4d versehen, an der Zusatzsensoren 12 angeordnet sind. Mit Hilfe dieser Zusatzsensoren 12 kann beim Absenken des Greifers 4 in die Bobinenhülse eine Feinstkorrektur erfolgen.

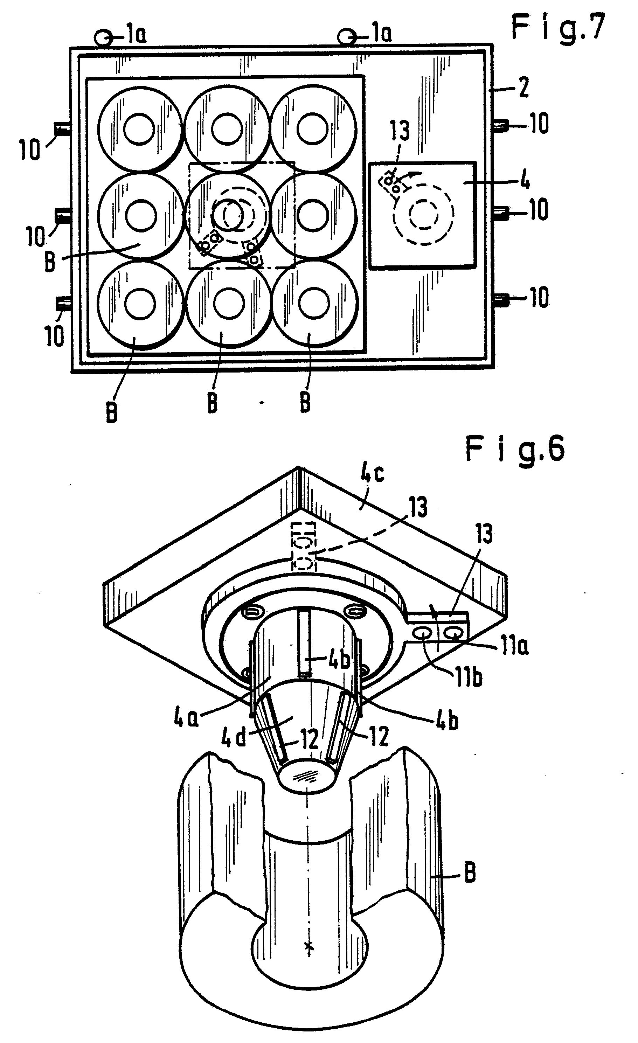

Bei der zweiten Ausführungsform des Greifers 4 gemäß den Figuren 6 und 7 ist anstelle mehrerer Paare von an einer Tragplatte 4c angeordneter Sensoren 11a und 11b lediglich ein Sensorenpaar 11a und 11b vorgesehen, das an einem Tragarm 13 angeordnet ist. Dieser Tragarm 13 rotiert entsprechend dem in den Figuren 6 und 7 eingezeichneten Pfeil, so daß die Anordnung nur eines Sensorenpaares 11a und 11b ausreicht, um die exakte Lage des Greifers 4 oberhalb einer Bobine B festzustellen. Diese Lage ist erreicht, wenn bei einem vollen Umlauf des Tragarmes 13 der innenliegende Sensor 11b ständig eine Bobine B erfaßt und der äußere Sensor 11a bis auf kurze Unterbrechungen durch benachbarte Bobinen B eine kontinuierliche Freimeldung abgibt.

Mit der voranstehend beschriebenen Vorrichtung können sämtliche Bobinen B einer Palette P nacheinander erfaßt und einer nachgeschalteten Transporteinrichtung zugeführt werden, die die Bobinen B entweder unmittelbar einer nachgeschalteten Verpackungsmaschine oder einem Zwischenstapel zuführt, von dem die einzelnen Bobinen B bei Bedarf der Verpackungsmaschine zugeführt werden.

**Patentansprüche**

1. Vorrichtung zum Entladen einzelner Bobinen (B) von einer Unterlage (P), auf der eine Mehrzahl von Bobinen (B) in mehreren Reihen nebeneinander und in mehreren Lagen übereinander gestapelt sind, mittels eines Greifers (4), welcher an einem höhenverstellbaren Rahmen (2) durch unter einem Winkel von 90° zueinander verlaufende Linearantriebe in einer Ebene verfahrbar ist, mit Sensoren (10), die jeweils die in einer Ebene liegenden Bobinen erfassen und die Höhenverstellung des Rahmens (2) steuern, und mit am Greifer (4) angeordneten Sensoren (11a, 11b) zur Ausrichtung des Greifers (4) zur jeweils zu erfassenden Bobine (B), dadurch gekennzeichnet, daß die Sensoren (10) zur Höhenverstellung am Rahmen (2) angeordnet sind und daß am Greifer (4) mindestens ein Paar der Sensoren (11a, 11b) angeordnet ist, von denen der eine Sensor (11b) einen geringeren und der andere Sensor (11a) einen größeren Abstand von der Mittelachse des Greifers (4) aufweist als der Außenhalbmesser der jeweils zu ergreifenden Bobinen (B).

2. Vorrichtung nach Anspruch 1, dadurch gekennzeichnet, daß der Greifer (4) als Spanndorn mit in radialer Richtung verstellbaren Spannelementen (4b) und das Gehäuse (4a) des Greifers (4) dem Innendurchmesser der Bobinenhülsen angepaßt ausgebildet ist.

3. Vorrichtung nach Anspruch 1 und 2, dadurch gekennzeichnet, daß das Gehäuse (4a) mit einer konischen Verlängerung (4d) versehen ist.

4. Vorrichtung nach mindestens einem der Ansprüche 1 bis 3, dadurch gekennzeichnet, daß die am Rahmen (2) angeordneten Sensoren als jeweils einer Reihe der Bobinen (B) zugeordnete Lichtschranken (10) ausgebildet sind.

5. Vorrichtung nach Anspruch 1, dadurch gekennzeichnet, daß die Sensoren (11a, 11b) an einem Tragarm (13) angeordnet sind, der um die Mittelachse des zylindrischen Gehäuses (4a) drehbar ist.

6. Vorrichtung nach Anspruch 1, dadurch gekennzeichnet, daß mindestens zwei, vorzugsweise vier Paar Sensoren (11a, 11b) an einer am Gehäuse (4a) befestigten Tragplatte (4c) angeordnet sind.

7. Vorrichtung nach den Ansprüchen 1 bis 6, dadurch gekennzeichnet, daß die Lage der Sensoren (11a, 11b) bezüglich der Mittelachse des Gehäuses (4a) entsprechend dem jeweiligen Außendurchmesser der Bobinen (B) verstellbar ist.

8. Vorrichtung nach mindestens einem der Ansprüche 1 bis 7, dadurch gekennzeichnet, daß an der konischen Verlängerung (4d) des Gehäuses (4a) mit der Bobinenhülse zusammenwirkende Zusatzsensoren (12) zur Feinkorrektur des Greifers (4) angeordnet sind.

**Claims**

1. A device for unloading discrete reels (B) from a support (P) on which a number of reels (B) have been stacked in a number of rows adjacent one another and in a number of layers one above another, with the use of a gripper (4) movable in one plane on a vertically adjustable frame (2) by linear drives disposed perpendicularly to one another, the device comprising : sensors (10) which each detect the reels in one plane and control the vertical adjustment of the frame (2) ; and sensors (11a, 11b) which are disposed on the gripper (4) and which are operative to align the same relatively to the particular reel (B) to be detected, characterised in that the vertical adjustment sensors (10) are disposed on the frame (2) and at least one pair of the sensors (11a, 11b) is disposed on the gripper (4), one sensor (11b) being at a shorter distance away from the central axis of the gripper (4) — and the other sensor (11a) being at a greater distance away from the central axis of the gripper (4) — than the external radius of the particular reels (B) to be detected.

2. A device according to claim 1, characterised in that the gripper (4) is in the form of a mandrel having radially adjustable clamping elements (4b) and the gripper casing (4a) is adapted to the inner diameter of the reel tubes.

3. A device according to claims 1 and 2, characterised in that the casing (4a) has a conical prolongation (4d).

4. A device according to at least one of claims 1-3, characterised in that the frame-mounted sensors are light barriers (10) each associated with a row of the reels (B).

5. A device according to claim 1, characterised in that the sensors (11a, 11b) are disposed on a support arm (13) rotatable around the central axis of the cylindrical casing (4a).

6. A device according to claim 1, characterised in that at least two and preferably four pairs of sensors (11a, 11b) are disposed on a support plate (4c) secured to the casing (4a).

7. A device according to claims 1-6, characterised in that the position of the sensors (11a, 11b) relatively to the central axis of the casing (4a) is adjustable to suit the outside diameter of the reels (B).

8. A device according to at least one of claims 1-7, characterised in that additional sensors (12) for fine correction of the gripper (4) and cooperating with the reel tube are disposed on the conical prolongation (4d) of the casing (4a).

## Revendications

1. Dispositif de déchargement de bobines individuelles (B) à partir d'un support (P) sur lequel un grand nombre de bobines ont été stockées en plusieurs rangées contiguës et en plusieurs couches superposées, au moyen d'un organe de préhension (4) qui est déplaçable dans un plan sur un châssis (2) réglable en hauteur au moyen d'entraînements linéaires formant entre eux un angle de 96°, comprenant des détecteurs (10) qui recensent les bobines se trouvant dans un plan et commandant le déplacement en hauteur du châssis (2), et des détecteurs (11a, 11b) disposés sur l'organe de préhension (4) aux fins d'alignement de l'organe de préhension (4) par rapport à la bobine (B) à saisir, caractérisé en ce que les détecteurs (10) sont disposés sur le châssis (2) en vue du déplacement en hauteur et en ce qu'il est disposé sur l'organe de préhension (4) au moins une paire de détecteurs (11a, 11b) dont l'un des détecteurs (11b) est positionné à une distance de l'axe médian de l'organe de préhension (4) inférieure au rayon extérieur des bobines (B) à saisir respectivement et l'autre détecteur (11a) à une distance dudit axe médian supérieur à ce rayon.

2. Dispositif selon la revendication 1, caractérisé en ce que l'organe de préhension (4) est constitué par un mandrin de serrage avec des éléments de serrage (4b) ajustables en direction radiale et en ce que le corps (4a) de l'organe de préhension (4) est adapté au diamètre intérieur des tubes de bobines.

3. Dispositif selon les revendications 1 et 2, caractérisé en ce que le corps (4a) est pourvu d'un prolongement conique (4d).

4. Dispositif selon au moins une des revendications 1 à 3, caractérisé en ce que les détecteurs disposés sur le châssis (2) sont réalisés sous forme de barrières lumineuses (10) respectivement affectées à une rangée de bobines (B).

5. Dispositif selon la revendication 1, caractérisé en ce que les détecteurs (11a, 11b) sont disposés sur un bras support (13), susceptible de tourner autour de l'axe médian du corps cylindrique (4a).

6. Dispositif selon la revendication 1, caractérisé en ce qu'il est disposé au moins deux paires et, de préférence, quatre paires de détecteurs (11a, 11b) sur une plaque portante (4c) fixée sur le corps (4a).

7. Dispositif selon les revendications 1 à 6, caractérisé en ce que la position des détecteurs (11a, 11b) peut être réglée par rapport à l'axe médian du corps (4a) en fonction du diamètre extérieur correspondant des bobines (B).

8. Dispositif selon au moins une des revendications 1 à 7, caractérisé en ce qu'il est disposé sur le prolongement conique (4d) du corps (4a) des détecteurs supplémentaires (12) accouplés avec le tube de bobine en vue d'une correction de précision de l'organe de préhension (4).

Fig.2

Fig.1

Fig.3

Fig.4

Fig.5

Fig.7

Fig.6